# EUROPÄISCHE PATENTSCHRIFT

(11) **EP 1 503 924 B1**
(45) Veröffentlichungstag und Bekanntmachung des Hinweises auf die Patenterteilung: **07.12.2005**
(21) Anmeldenummer: 03708249.2
(22) Anmeldetag: 18.03.2003
(51) Int. Cl.: B60T 7/10, B60T 13/66

(54) **FAHRZEUGBREMSANLAGE, MIT EINER BETRIEBSBREMSANLAGE UND EINER FESTSTELLBREMSANLAGE**
VEHICLE BRAKE SYSTEM COMPRISING A SERVICE BRAKE SYSTEM AND A PARKING BRAKE SYSTEM
SYSTEME DE FREINAGE DE VEHICULE COMPRENANT UN FREIN DE SERVICE ET UN FREIN DE STATIONNEMENT

(30) Priorität: 16.05.2002 DE 10221740
(43) Veröffentlichungstag der Anmeldung: 09.02.2005
(73) Patentinhaber: DaimlerChrysler AG, 70567 Stuttgart (DE)
(72) Erfinder: FISCHER, Jörg, 73733 Esslingen (DE)
(86) Internationale Anmeldenummer: PCT/EP2003/002782
(87) Internationale Veröffentlichungsnummer: WO 2003/097421

(56) Entgegenhaltungen:
- EP-A- 1 231 118
- WO-A-00/03904
- DE-A- 19 908 062
- GB-A- 2 017 241
- US-A- 2 278 645

## Beschreibung

Die Erfindung betrifft eine Fahrzeugbremsanlage mit einer Betriebsbremsanlage und einer Feststellbremsanlage.

Fahrzeuge, die eine Betriebsbremsanlage und eine Feststellbremsanlage aufweisen, sind allgemein bekannt. Üblicherweise weisen die Fahrzeuge zum Betätigen der Betriebsbremse ein Bremspedal auf. Zum Betätigen der Feststellbremsanlage ist üblicherweise ein vom Bremspedal verschiedenes Feststellbremsenbetätigungsmittel vorgesehen, das geeignet ist, eine Feststellbremse zu aktivieren, das heißt deren Zustellmittel in eine Bremsstellung zu verbringen, in der ein Bremseingriff vorliegt, und wieder zu lösen. Dabei wird die Feststellbremse so ausgebildet, dass deren Zustellmittel ohne weitere Betätigung oder Energiezufuhr in ihrer Bremsstellung verbleiben. Dies erfolgt insbesondere durch mechanisches Verriegeln, beispielsweise mittels Sperrklinken.

Weiter ist es aus der gattungsgemäß zugrundegelegten DE 199 08 062 A1 bekannt, dass Zustellorgane der Betriebsbremse gleichzeitig als Zustellorgane der Feststellbremsanlage dienen können, wobei die Feststellbremse so ausgeführt ist, dass nach dem Aktivieren der Feststellbremse die Zustellorgane der Betriebsbremse in ihrer zugestellten, bremsenden Stellung verbleiben, auch wenn keine weitere Betätigung oder Energiezufuhr erfolgt. Dabei kann dann in Abhängigkeit eines weiteren Signals, nämlich der Fahrzeuggeschwindigkeit, bei Betätigung eines Bedienelementes entweder die Betriebsbremse oder die Feststellbremse von dem Bedienelement angesteuert wird. Liegt die Fahrzeuggeschwindigkeit oberhalb eines Grenzwertes, so wird über das Bedienelement die Betriebsbremse angesprochen, während unterhalb des Grenzwertes für die Fahrzeuggeschwindigkeit die Feststellbremse angesprochen wird.

Betriebsbremsen, die beim Vorliegen einer weiteren Information, beispielsweise einem Wert der Fahrzeuggeschwindigkeit, eine Feststellbremsfunktion aufweisen sind beispielsweise deshalb vorteilhaft, weil damit verhindert werden kann, dass ein Fahrzeug ohne aktivierte Feststellbremse abgestellt wird, und damit nicht ausreichend gegen unbeabsichtigtes Wegrollen gesichert ist.

Ein Nachteil solcher Feststellbremsen ist die Abhängigkeit von einer Auswertung, in der ausgewertet wird, ob zu einem bestimmten Zeitpunkt eine Aktivierung der Feststellbremse erfolgen soll oder nicht. Diese Auswertung setzt eine funktionierende Auswerteschaltung voraus.

Aufgabe der vorliegenden Erfindung ist es, eine derartige Fahrzeugbremsanlage so auszubilden, dass die Feststellbremsanlage auch bei Ausfall der ihre Funktion ansteuernden Auswerteeinheit aktivierbar ist.

Die Aufgabe der Erfindung wird mit einer Fahrzeugbremsanlage gemäß dem Anspruch 1 gelöst.

Eine Fahrzeugbremsanlage gemäß der Erfindung wird aus einer Betriebsbremsanlage und einer Feststellbremsanlage gebildet. Die Betriebsbremsanlage ist mittels eines Bedienelements, einem Betriebsbremspedal vom Fahrer betätigbar. Bei der Betätigung der Betriebsbremse werden Zustellorgane der Betriebsbremse zugestellt, so dass eine Bremswirkung erzeugt wird. Darüber hinaus ist eine Auswerteeinheit vorgesehen. Der Auswerteeinheit werden Informationen über die Betätigung der Betriebsbremse sowie wenigstens eine weitere Information zugeführt. Bei entsprechenden Bedingungen wird von der Auswerteeinheit die Feststellbremsanlage aktiviert um ein Feststellen des Fahrzeugs mit der Feststellbremse zu erzeugen. Hierzu werden Zustellorgane der Betriebsbremsanlage durch ein Verriegelungselement bis zu dessen Lösen ohne weitere Betätigung eines Betätigungsmittels und ohne weitere Energiezufuhr in ihrer zugestellten Stellung gehalten. Darüber hinaus ist ein von der Auswerteeinheit unabhängiges Betätigungsmittel zum Aktivieren der Feststellbremsanlage vorgesehen.

Bei dem weiteren Betätigungsmittel handelt es sich gemäß vorteilhafter Ausgestaltung um ein im normalen Fahrzeugbetrieb nicht betätigtes Notbedienelement. Ein solches Notbedienelement kann so ausgebildet sein, dass bei dessen Betätigung ein Zustellen der Zustellorgane der Betriebsbremsanlage, die auch der Feststellanlage dienen, erfolgt. Alternativ ist es auch möglich, dass zunächst ein Zustellen der Zustellorgane über die Betriebsbremsanlage durch entsprechende Betätigung des Betriebsbremspedals erfolgt und erst dann das Notbedienelement betätigt wird, das auf Verriegelungselemente einwirkt, die die entsprechenden Zustellorgane in der zugestellten Stellung halten.

Das weitere Betätigungsmittel kann gemäß Ausgestaltungen der Erfindung sowohl mechanische als auch fluidische Übertragungsmittel umfassen, die die Betätigung des Bedienelementes an die entsprechenden Aktuatoren der Feststellbremsanlage weiterleitet.

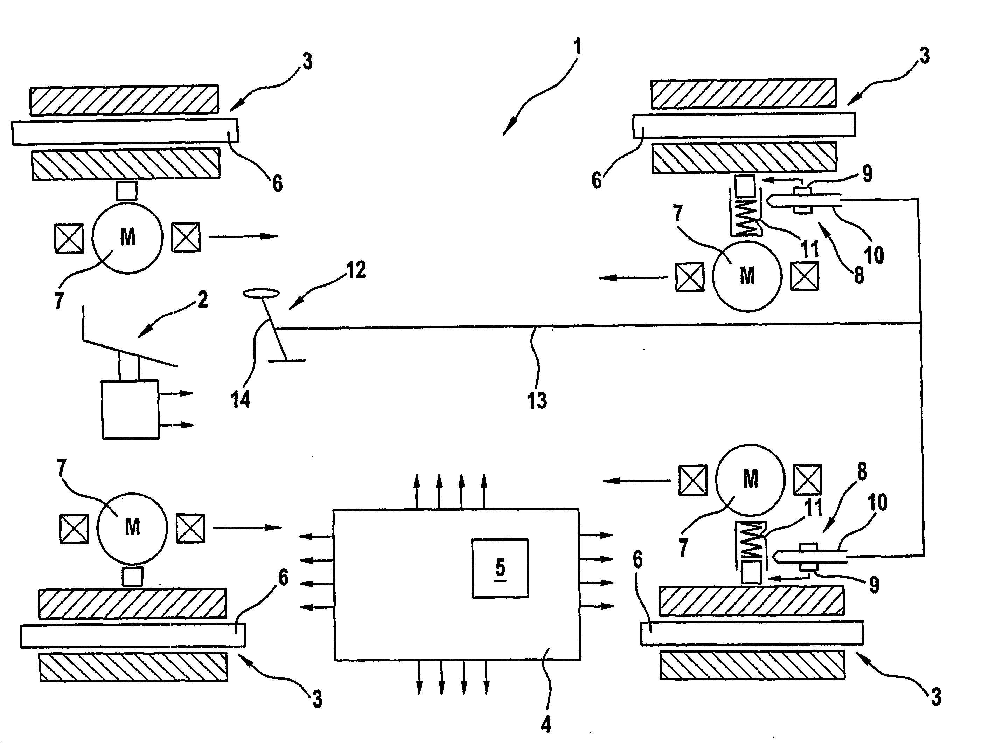

Eine Ausgestaltung der Erfindung ist in der Zeichnung dargestellt. Dabei zeigt die einzige Figur in schematischer Darstellung eine erfindungsgemäße Fahrzeugbremsanlage.

Die Figur zeigt in schematischer Darstellung eine Fahrzeugbremsanlage 1. Die Fahrzeugbremsanlage 1 weist ein Betriebbremspedal 2 als Betätigungsmittel der Betriebsbremsanlage auf. Das Bremspedal 2 dient in dem dargestellten Ausführungsbeispiel nicht unmittelbar zur Erzeugung der Betätigungskraft der Zustellorgane 3, die den einzelnen Rädern des Fahrzeuges zugeordnet sind, wobei an jedem Rad ein Zustellorgan 3 vorgesehen ist. Vielmehr dient das Betriebsbremspedal 2 als vom Fahrer betätigbarer Sollwertgeber. Der Fahrer erzeugt durch Betätigung des Betriebsbremspedals 2 ein Signal, das in dem Steuergerät 4, das auch die Auswerteeinheit 5 beinhaltet, ausgewertet wird.

Das Steuergerät 4 erzeugt aufgrund des den Bremswunsch repräsentierenden Signals, ggf. unter Berücksichtigung weiterer Betriebs- und Zustandsgrößen des Fahrzeugs, ein Bremssignal, das den Bremsstellern 7 zugeführt wird. Jedem Zustellorgan 3 ist ein Bremssteller 7 zugeordnet. Aufgrund des dem Bremssteller 7, beispielsweise einem Elektromotor, zugeführten Bremssignals erzeugt der Bremssteller 7 eine Zustellbewegung des zugeordneten Zustellorgans 3. Die Zustellorgane sind in diesem Fall Bremsbeläge, die in einem fahrzeugseitig gehaltenen Bremssattel angeordnet sind, die dadurch in Anlage mit der mit dem entsprechenden Rad mitbewegten Bremsscheibe 6 gelangen. Die Bremswirkung entsteht durch Reibschluss zwischen den Bremsbelägen und der Bremsscheibe 6. Obgleich anhand einer Scheibenbremsanlage beschrieben, kann die Erfindung in entsprechender Weise auch bei Trommelbremsen realisiert werden.

Die Feststellbremsanlage wird aus dem Betriebsbremspedal 2, der Auswerteeinheit 5 des Steuergerätes 4, und einem Teil der Zustellorgane 3, im dargestellten Ausführungsbeispiel den Zustellorganen 3 der Betriebsbremsen der Hinterachse des Fahrzeuges, sowie den dort angeordneten Verriegelungselementen 8 gebildet. Die Verriegelungselemente 8 greifen an den Zustellorganen 3 wenigstens mittelbar an. Sie sind beispielsweise elektromagnetisch betätigt. Das Aktivieren der Feststellbremse erfolgt durch die Auswerteeinheit 5 des Steuergerätes 4. Wird dort darauf geschlossen, dass ein Feststellbremsfall vorliegt, so werden die Verriegelungselemente 8 angesteuert. Die Verriegelungselemente 8 verriegeln die entsprechenden Zustellorgane 3 der Betriebsbremsanlage in einer Stellung, in der die Bremswirkung an den beteiligten Zustellorganen so groß ist, dass das Fahrzeug auch in Steigungen im Stillstand bleibt.

Die Verriegelungselemente 8 sind beispielsweise über einen Elektromagneten 9 zwischen zwei stabilen Endlage verschiebbaren Sperrklingen 10. In der dargestellten Ruhestellung ist die Feststellbremsanlage geöffnet. Beim Aktivieren der Feststellbremsfunktion wird durch die Wirkung des Elektromagneten 9 die Sperrklinge 10 in eine Stellung verschoben, die die andere Endlage bildet und in der sie in eine zustellorganseitig ausgebildete Raste 11 eingreift. Die Sperrklinge 10 hält dann die Zustellorgane 3 mechanisch verriegelt in ihrer geschlossenen Stellung. Eine andauernde Betätigung eines Betätigungsmittels oder andauernde Energiezufuhr ist nicht erforderlich. Hierzu kann die andere Endlage auch durch Selbsthemmung zwischen Sperrklinge 10 und Raste 11 aufrechterhalten sein.

Der Auswerteeinheit 5 wird das Signal, das von dem Bremspedal 2 erzeugt wird zugeführt. Damit eine Aktivierung der Feststellbremse erfolgt, muss von dem Bremspedal ein eine Bremsung, ggf. auch eine Bremsung mit einem vorgegebenen Mindestbetätigungsweg des Bremspedals 2, vorliegen. Darüber hinaus wird der Auswerteeinheit 5 wenigstens eine weitere Information zugeführt. Wenn zusätzlich zum Bremspedal diese wenigstens eine weitere Information innerhalb eines vorgegebenen Wertebereiches liegt, so wird von der Auswerteeinheit 5 geschlossen, dass die Feststellbremse aktiviert werden soll.

Beispiele für die wenigstens eine weitere Information sind die Fahrzeuggeschwindigkeit, die Stellung des Zündschalters und/oder aber auch die Betätigung eines fahrerbetätigbarern elektrischen Schaltelements. Beispielsweise kann die Feststellbremse immer dann aktiviert werden, wenn die Betriebsbremse betätigt ist und sich das Fahrzeug im Stillstand befindet. Es ist dann gegen unbeabsichtigtes Losrollen geschützt, auch wenn der Fahrer die Betätigung des Bremspedals beendet. Auch beim Abziehen des Zündschlüssels, vorzugsweise dann, wenn der Schlüssel die Stellung "Zündung ein" verlässt und in Richtung "Zündung aus" bewegt wird, kann die Feststellbremse aktiviert werden. Es kann alternativ oder ergänzend auch ein elektrisches Schaltelement vorgesehen sein, das die Feststellbremse aktiviert, wenn es aufgrund der Betätigung durch den Fahrer ein entsprechendes Signal an die Auswerteeinheit übermittelt.

Das Lösen der Feststellbremse erfolgt ebenfalls gesteuert durch das Steuergerät. So kann das Lösen beispielsweise dann erfolgen, wenn ein vorgegebenes Antriebsmoment im Antriebsstrang überschritten wird.

Gemäß der Erfindung ist neben der Auswerteeinheit 5 des Steuergerätes 4 noch eine weitere Betätigungseinrichtung für das Bremspedal gegeben. Es handelt sich dabei um das Notbedienelement 12. Das Notbedienelement 12 weist dabei einen auf Zug und Schub belastbaren Seilzug 13, Bowdenzug, auf, das der Kraftübertragung dient. Ein vom Fahrer betätigbarer Bedienhebel 14 dient als Betätigungsmittel. Der Seilzug greift an der Sperrklinge 10 an und kann diese auch ohne oder gegen die Wirkung des Elektromagneten 9 zwischen deren beiden Endlagen verfahren.

Zum Aktivieren der Feststellbremse unter Verwendung des Bedienhebels 14, der Teil des Notbedienelementes 12 ist und daher im normalen Fahrbetrieb nicht benutzt wird, ist es zunächst erforderlich, das Betriebsbremspedal so zu betätigen, dass die Zustellorgane 3 zugestellt sind. Dann wird der Bedienhebel in Schließstellung verbracht. Hierdurch wird über den Seilzug 13 eine Kraft an die Sperrklinge 10 übertragen und diese von ihrer dargestellten, geöffneten Endlage in die andere, ein Öffnen der Zustellorgane 3 der Hinterachse verhindernde andere Endlage verbracht. Die Sperrklinge 10 greift nun in die Raste 11 ein und die Feststellbremse ist angelegt und mechanisch gesperrt. Eine stabile Endlage der Sperrklinge 11 wird erreicht. Die Betätigung des Betriebsbremspedals 2 kann beendet werden.

Zum Lösen der mechanischen Sperrung über den Seilzug muss der Bedienhebel 14 wieder in seine ursprüngliche Ausgangslage verbracht werden.

Die Betätigung der Feststellbremse über das Notbedienelement kann also unabhängig von dem Steuergerät 4 und der Auswertelogik erfolgen. Dies geht insbesondere auch dann, wenn Störungen im Bordnetz oder der Steuerungselektronik vorhanden sind. Es stellt eine rein mechanische Rückfalllösung dar, die aber gegenüber der rein elektronisch gesteuerten Feststellbremse, die in die Betriebsbremse integriert ist nur wenige zusätzliche Bauteile benötigt.

Nachdem der Bedienhebel 14 des Notbedienelementes 12 nicht regelmäßig sondern nur ausnahmsweise zu betätigen ist, kann der Bedienhebel an weniger gut erreichbaren Positionen im Arbeitsbereich des Fahrers angeordnet werden. Auch der Bedienkomfort kann geringer gehalten werden, beispielsweise können die zur Betätigung erforderlichen Betätigungskräfte gegenüber einer stets mechanisch zu betätigenden Feststellbremse größer gehalten werden. Zu beachten ist dabei, dass in der dargestellten Ausführungsform nicht die Betätigungskraft der Feststellbremse am Bedienhebel 14 aufgebracht werden muss, sondern lediglich eine Ein- bzw. Ausrückkraft der Sperrklinge 10.

Alternativ zu einem Seilzug kann beispielsweise auch mit einer Stellschraube oder einem Stellrad, das ggf. auch direkt auf die Zustellorgane einwirkt, eine Notbedienung der Feststellbremse erfolgen. Ebenso kann anstelle des Seilzuges auch eine fluidische, insbesondere pneumatische Betätigung der Sperrklinge erfolgen. In diesem Fall ist vorzugsweise vorzusehen, dass Federzylinder vorgespannt sind und durch eingespeisten Druck die Sperrklinge in der geöffneten Endlage gehalten wird. Durch das Bedienelement wird dann der Federzylinder entlüftet und durch die Federwirkung die Sperrklinge 11 in die andere Endlage, also in Eingriff mit der Raste 11 gebracht.

## Patentansprüche

1. Fahrzeugbremsanlage, mit einer Betriebsbremsanlage und einer Feststellbremsanlage, wobei die Betriebsbremsanlage vom Fahrer mittels eines Betriebsbremspedals (2) betätigbar ist, wodurch ein Zustellen von Zustellorganen (3), die die Bremswirkung erzeugen, erfolgt, wobei eine Auswerteeinheit (5) vorgesehen ist, in der aufgrund der Betätigung des Betriebsbremspedals (2) und wenigstens einer weiteren Informationen ein Aktivieren der Feststellbremsanlage erfolgt, wodurch Zustellorgane (3) der Betriebsbremsanlage durch ein Verriegelungselement (8) bis zu dessen Lösen ohne weitere Betätigung eines Betätigungsmittels und ohne weitere Energiezufuhr in ihrer zugestellten Stellung gehalten werden,
**dadurch gekennzeichnet,**
**dass** darüber hinaus ein weiteres, von der Auswerteeinheit (5) unabhängiges Betätigungsmittel (12) zum Aktivieren der Feststellbremsanlage vorgesehen ist.

2. Fahrzeugbremsanlage nach Anspruch 1,
**dadurch gekennzeichnet,**
**dass**, wobei das weitere Betätigungsmittel (12) ein im normalen Fahrzeugbetrieb nicht betätigtes Notbedienelement ist.

3. Fahrzeugbremsanlage nach Anspruch 2,
**dadurch gekennzeichnet,**
**dass** durch das Notbedienelement (12) die Zustellorgane (3) der Betriebsbremsanlage, die von der Feststellbremsanlage benutzt werden, zustellbar sind.

4. Fahrzeugbremsanlage nach Anspruch 2,
**dadurch gekennzeichnet,**
**dass**, das Notbedienelement (12) auf Verriegelungselemente (8) einwirkt, die Zustellorgane (3) der Betriebsbremsanlage ohne weitere Betätigung eines Betätigungsmittels in der zugestellten Stellung halten, wobei das Herbeiführen der zugestellten Stellung der Zustellorgane (3) durch Betätigen des Betriebsbremspedals (2) erfolgt.

5. Fahrzeugbremsanlage nach einem der Ansprüche 1 bis 4,
**dadurch gekennzeichnet,**
**dass** das weitere Betätigungsmittel (12) ein mechanisches, die Feststellbremse lösbar arretierendes Betätigungsmittel ist.

6. Fahrzeugbremsanlage nach Anspruch 5,
**dadurch gekennzeichnet,**
**dass** das weitere Betätigungsmittel (12) ein Seilzug (13), insbesondere ein im Zug- und Schubbetrieb nutzbarer Seilzug (13) ist.

7. Fahrzeugbremsanlage nach Anspruch 5,
**dadurch gekennzeichnet,**
**dass** das weitere Betätigungsmittel (12) ein auf das Verriegelungselement (8) einwirkendes mechanisches Betätigungselement, beispielsweise eine manuell betätigbare Zustell- und Löseschraube ist.

8. Fahrzeugbremsanlage nach einem der Ansprüche 1 bis 4,
**dadurch gekennzeichnet,**
**dass** das weitere Betätigungsmittel (12) ein pneumatisch, die Feststellbremse lösbar arretierendes Betätigungsmittel, beispielsweise eine die Verriegelung (8) betätigende pneumatische Ventileinheit, ist.

## Claims

1. Vehicle brake system having a service brake system and a parking brake system, wherein the service brake system can be activated by the driver by means of a service brake pedal (2), as a result of which application elements (3) which generate the braking effect are applied, wherein an evaluation unit (5) is provided in which the parking brake system is actuated on the basis of the activation of the service brake pedal (2) and of at least one further item of information, as a result of which application elements (3) of the service brake system are held in their applied position by a locking element (8) until it is released, without further activation of an activation means and without further supply of energy, **characterized in that** a further activation means (12) which is independent of the evaluation unit (5) is also provided for activating the parking brake system.

2. Vehicle brake system according to Claim 1, **characterized in that** the further activation means (12) is an emergency operator control element which is not activated in the normal operating mode of the vehicle.

3. Vehicle brake system according to Claim 2, **characterized in that** the emergency operator control element (12) can apply the application elements (3) of the service brake system which are used by the parking brake system.

4. Vehicle brake system according to Claim 2, **characterized in that** the emergency operated control element (12) acts on locking elements (8) which keep the application elements (3) of the service brake system in the applied position without further activation of an activation means, wherein the applied position of the application elements (3) is brought about by activating the service brake pedal (2).

5. Vehicle brake system according to one of Claims 1 to 4, **characterized in that** the further activation means (12) is a mechanical activation means which locks the parking brake in a releasable fashion.

6. Vehicle brake system according to Claim 5, **characterized in that** the further activation means (12) is a Bowden cable (13), in particular a Bowden cable (13) which can be used in pushing and pulling mode.

7. Vehicle brake system according to Claim 5, **characterized in that** the further activation means (12) is a mechanical activation element, for example a locking and release screw, which acts on the locking element (8).

8. Vehicle brake system according to one of Claims 1 to 4, **characterized in that** the further activation means (12) is an activation means which pneumatically locks the parking brake in a releasable fashion, said means being, for example, a pneumatic valve unit which activates the lock (8).

## Revendications

1. Système de freinage de véhicule comprenant un frein de service et un frein de stationnement, ledit frein de service pouvant être actionné par le conducteur au moyen d'une pédale de frein de service (2), ce qui induit un actionnement d'organes d'actionnement (3) engendrant l'effet de freinage, une unité d'évaluation (5) étant prévue, dans laquelle a lieu une activation du frein de stationnement, du fait de la commande de la pédale du frein de service (2) et d'une autre information au moins, des organes d'actionnement (3) du frein de service étant maintenus dans leur position d'actionnement par un élément de verrouillage (8) jusqu'à son desserrage, sans autre commande d'un moyen de commande et sans autre apport d'énergie, **caractérisé en ce qu'**en plus, un autre moyen de commande (12) indépendant de l'unité d'évaluation (5) est prévu pour l'activation du frein de stationnement.

2. Système de freinage de véhicule selon la revendication 1, **caractérisé en ce que** l'autre moyen de commande (12) est constitué par un élément de commande de secours non actionné en fonctionnement normal du véhicule.

3. Système de freinage de véhicule selon la revendication 2, **caractérisé en ce que** les organes d'actionnement (3) du frein de service utilisés par le frein de stationnement sont réglables par l'élément de commande de secours (12).

4. Système de freinage de véhicule selon la revendication 2, **caractérisé en ce que** l'élément de commande de secours (12) exerce une action sur des éléments de verrouillage (8) maintenant les organes d'actionnement (3) du frein de service dans la position actionnée, sans autre commande d'un moyen de commande, la mise en oeuvre de la position d'actionnement des organes d'actionnement (3) se faisant par commande de la pédale du frein de service (2).

5. Système de freinage de véhicule selon l'une quelconque des revendications 1 à 4, **caractérisé en ce que** l'autre moyen de commande (12) est constitué par un moyen de commande mécanique verrouillant le frein de stationnement et desserrable.

6. Système de freinage de véhicule selon la revendication 5, **caractérisé en ce que** l'autre moyen de commande (12) est constitué par une commande par câble (13), notamment une commande par câble (13) pouvant travailler en poussée et en traction.

7. Système de freinage de véhicule selon la revendication 5, **caractérisé en ce que** l'autre moyen de commande (12) est constitué par un moyen de commande mécanique exerçant une action sur l'élément de verrouillage (8), une vis d'actionnement et de desserrage à commande manuelle, à titre d'exemple.

8. Système de freinage de véhicule selon l'une quelconque des revendications 1 à 4, **caractérisé en ce que** l'autre moyen de commande (12) est constitué par un moyen de commande pneumatique verrouillant le frein de stationnement et desserrable, une unité de distribution pneumatique actionnant le verrouillage, à titre d'exemple.
